# EUROPEAN PATENT SPECIFICATION

(11) **EP 2 497 592 B1**
(45) Date of publication and mention of the grant of the patent: **20.11.2013**
(21) Application number: 10828187.4
(22) Date of filing: 18.10.2010
(51) Int. Cl.: B23C 5/10, B23C 3/16, B23C 9/00, B29C 33/38, B29L 11/00, G02B 3/00, B23B 27/06, B24B 13/04, B23B 27/20

(54) **Cutting tool, method for manufacturing molding die**
Schneidwerkzeug, verfahren zur herstellung eines formwerkzeugs
Outil de découpe, procédé de fabrication de matrice de moulage

(30) Priority: 05.11.2009 JP 2009254303; 28.12.2009 JP 2009296598; 15.01.2010 JP 2010006580
(43) Date of publication of application: 12.09.2012
(73) Proprietor: Konica Minolta Advanced Layers, Inc., Hachioji-shi, Tokyo (JP)
(72) Inventor: IMAI Toshiyuki, Hachioji-shi Tokyo 192-8505 (JP); TAKITANI Toshiya, Hachioji-shi Tokyo 192-8505 (JP); MORIMOTO Tomoyuki, Hachioji-shi Tokyo 192-8505 (JP); MATSUDA Hiroyuki, Hachioji-shi Tokyo 192-8505 (JP); HOSOE Shigeru, Hachioji-shi Tokyo 192-8505 (JP)
(74) Representative: Henkel, Breuer & Partner
(86) International application number: PCT/JP2010/068256
(87) International publication number: WO 2011/055627

(56) References cited:
- JP-A- 6 008 028
- JP-A- 11 197 902
- JP-A- 62 292 309
- JP-A- 2001 121 337
- JP-A- 2005 212 015
- JP-A- 2005 342 805
- JP-A- 2007 075 944
- JP-A- 2007 090 517
- US-A- 2 378 094
- US-A- 3 025 726

## Description

### TECHNICAL FIELD

The present invention relates to a cutting tool according to the preamble of claim 1 and a method for manufacturing a molding die according to the preamble of claim 6. An example of such a cutting tool is known from JP 2005-342805.

### PRIOR TECHNICAL DOCUMENT

### PATENT DOCUMENT

Patent Document 1: Japanese Patent No. 3926380B

### BACKGROUND TECHNOLOGY

Conventionally, in a field of manufacturing optical lenses, a technology has been studies to obtain a high heat-resistant lens by providing a lens section made of hardening resin on a glass plate (for example, refer to Patent Document 1). As an example of the manufacturing method of optical lens applying this technology, proposed is a method where a so-called "wafer lens" is formed which is provided with optical members made of hardening resin on the surface of glass plate, and after that the glass plate is cut by each lens section.

In cases of manufacturing a resin-made lens section of wafer lens or its resin-made transfer mold, a metallic molding die is generally used. As an example of manufacturing the molding die, there is a method of forming a circular concave or convex by making swirl revolution while rotating of a ball end mill with respect to the subject to be cut. Specifically, while rotating a cutting blade provided at an end of a shank section of the ball end mill, the cutting blade is directly made contact to the subject material to cut it.

### SUMMARY OF THE INVENTION

### PROBLEMS TO BE SOLVED BY THE INVENTION

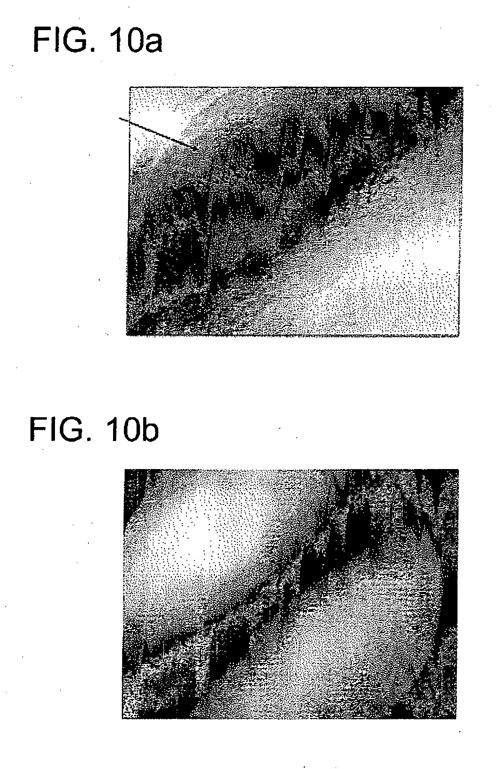

However, in cases of simply executing the cutting by the above way, minute imbricate recesses and protrusions (see Fig. 10a) or machined flaws (Fig. 10a) are formed according to the trajectory of swirling revolution of the ball end mill, which prevent the formation of smooth curved surface.

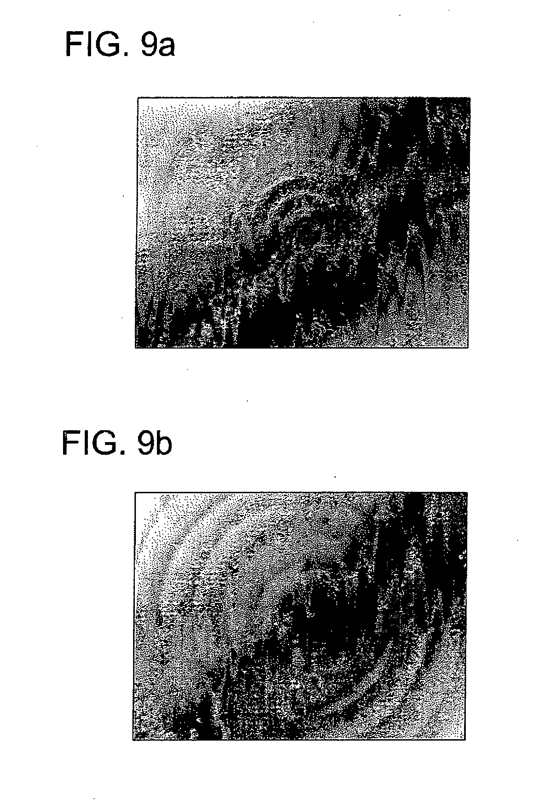

Further, in the method of forming circular concave or convex by making swirling revolutions while rotating of a ball end mill with respect to the subject material, although the cutting blade provided at the edge of ball end mill basically contact the subject to be cut while rotating, the rotation center part of the cutting blade contacts the subject to be cut substantially with the state of no rotation. In this case in the part where the rotation center of the cutting blade passed on the subject material, machined flaws are formed in such a manner that the subject material is dragged and scuffed accompanying to the movement of the ball end mill (see Fig. 9b).

By examining the problem of minute imbricate recesses and protrusions, the inventers found out that due to the structure of the ball end mill, although the cutting blade is provided at the tip of the shank section, since the cutting blade is brazed on a supporting member which supports and fixes the cutting blade, and the supporting member is connected to the shank section (since the cutting blade is attached on the shank section via the supporting member), a void is formed between the shank section and the supporting member/cutting blade, and this void causes the vibration of the cutting blade. Namely, the inventors found out that although the cutting blade is arranged on the rotation axis of the ball end mill, during the movement of the ball end mill, the cutting blade swings between the position on the rotation axis and the position dislocated from the axis, and causes to form the minute recesses and protrusions.

Further, the present inventors examined the problem of machined flaws being formed according to the trajectory of swirling revolution of the ball end mill, and found out that since the cutting blade provided at the edge of ball end mill contacts the subject material at the rotation center part of the cutting blade with the state of substantially no rotation, and further, since the rotation center part is inflected, the rotational center part of the cutting blade drags and scuffs the subject material accompanying to the movement of the ball end mill, and machined flaws are formed on the surface of concave or convex.

Therefore, a main objective of the present invention is to provide a cutting tool and a method for manufacturing a molding die that prevent the machined flaws being formed on the subject material, and enable the formation of the smooth curved surface of concave or convex.

### MEANS FOR SOLVING THE PROBLEMS

In order to solve the abovementioned problem, the present invention provides a cutting tool including the features of claim 1. Preferred embodiments of the cutting tool are defined in the dependent claims. This cutting tool has
a cutting blade;
a shank section; and
a supporting member for supporting and fixing the cutting blade, the cutting blade being fixed on one end of the supporting member, and the other end of the supporting member being fixed to the shank section,
wherein a void formed among the shank section, the cutting blade, and the supporting member is filled with a filling agent.

According to an other aspect of the present invention, provided is a use of such a cutting tool for cutting a subject material by making a swirling revolution of a cutting blade while rotating a part of the cutting blade about a rotation center part of the cutting blade as defined claim 5. Preferably the rotation center part of the cutting blade of the tool is a part of a circular are, and a radius r of the circular arc of the rotation center part satisfies the condition of: 0.05 ≤ **r** ≤ 5 µm.

According to another aspect of the present invention, provided is a method for manufacturing a molding die, including the steps of claim 6.

According to the present invention, there is provided a method for manufacturing a molding die, including the steps of:
forming a convex or concave part by applying a rough processing to a subject material to be cut; and
applying a finish processing to the convex or concave part by making swirling revolution of a ball end mill while rotating the ball end mill with respect to the convex or concave part,
wherein in the step of applying the finish processing to the convex or concave part, with respect to a first area including an area perpendicular to the optical axis of the convex or concave part, a cutting work of the finish processing is executed by inclining a rotation axis of the ball end mill against the optical axis, and with respect to a second area adjacent to the first area, the cutting work is executed by making the rotation axis of the ball end mill parallel to the optical axis.

Further, according to the present invention, provided is a method for manufacturing a molding die by a cutting work using a cutting tool of the invention
the method comprising the steps of:
forming a convex or concave part by applying a rough processing to a subject material to be cut; and
applying a finish processing to the convex or concave part by making swirling revolution of a ball end mill while rotating the ball end mill with respect to the convex or concave part,
wherein in the step of applying the finish processing to the convex or concave part, with respect to a first area including an area perpendicular to the optical axis of the convex or concave part, a cutting work of the finish processing is executed by inclining a rotation axis of the ball end mill against the optical axis, and with respect to a second area adjacent to the first area, the cutting work is executed by making the rotation axis of the ball end mill parallel to the optical axis.

### EFFECT OF THE INVENTION

According to the present invention, since the void among the shank section, cutting blade and the supporting blade is filled with the filling agent, the vibration caused by the rotation of cutting tool is suppressed to enable the formation of a smooth curved surface of concave or convex of the subject.

Further, according to the present invention, since the cutting blade is arranged on the rotation axis, and the rotation center part of the cutting blade has a curvature, the rotation center part of the cutting blade draws a swirling trajectory while smoothly contacting the subject material. Therefore, the rotation center part of cutting blade is prevented from being dragged and scuffed by the swirling movement, which prevents the formation ofmachined flaws on the subject material.

Further, according to the present invention, since the rotation center of the ball end mill has no rotational velocity and has no cutting ability. Therefore, in the area perpendicular to the optical axis of the concave or convex part of the subject material, the rotation axis of the ball end mill is inclined against the optical axis. As the result, generation of machined flaws on the subject can be prevented.

### BRIEF DESCRIPTION OF THE DRAWINGS

Fig. 1 is a perspective view showing an outline structure of concave molding die.
Fig. 2 is a section view taken along a line I-I of Fig. 1.
Fig. 3a is a perspective view and Fig. 3b is a partially enlarged view respectively showing an outline structure of the cutting device.
Fig. 4a is a perspective view and Fig. 4b is a partially enlarged view respectively showing an outline structure of a variant example of the cutting device.
Fig. 5a is a plan view and Fig. 5b is a side view respectively showing an outline structure of a ball end mill.
Fig. 6 is a side section view showing an outline structure of the tip part of the ball end mill.
Fig. 7 shows schematic diagrams illustrating over time a method for manufacturing a molding die.
Fig. 8 is a drawing schematically showing a mode of finish processing.
Figs. 9a and 9b are microscopic photo images showing the concave part of the molding die after the finish processing, which compare the surface figures caused by the difference of cutting blade figures.
Figs. 10a and 10b are microscopic photo images showing the concave part of the molding die after the finish processing, which show the surface figures in a case where the void in the ball end mill is not filled with the filling agent.
Figs. 11a and 11b are plan views schematically illustrating modes of an alignment mark.
Fig. 12 is a perspective view showing an outline structure of convex molding die.
Fig. 13 is a section view taken along a line II-II of Fig. 12.
Fig. 14 is a drawing schematically showing a mode of finish processing.
Fig. 15 is a drawing schematically showing a principle of finish processing.
Fig. 16 is a section view taken along a line II-II of Fig. 12.

### PREFERRED EMBODIMENT OF THE INVENTION

Hereinafter, the preferred embodiment of the present invention will be explained referring to the drawings.

### [CONCAVE MOLDING DIE (MOTHER DIE)]

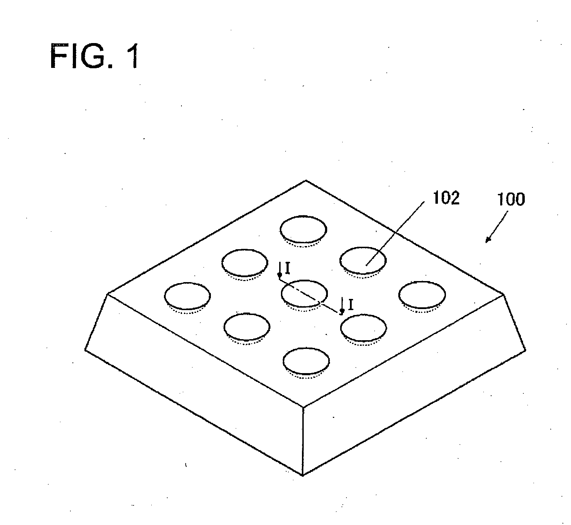

As shown in Fig. 1, molding die 100 has approximately a rectangular figure, and on its surface, multiple concave portions 102 (cavities) are formed. The molding die 100 is an example of the molding die for array lens, which is preferably utilized particularly for molding a resin lens section of wafer lens, and further usable for manufacturing its resin made transfer molding die.

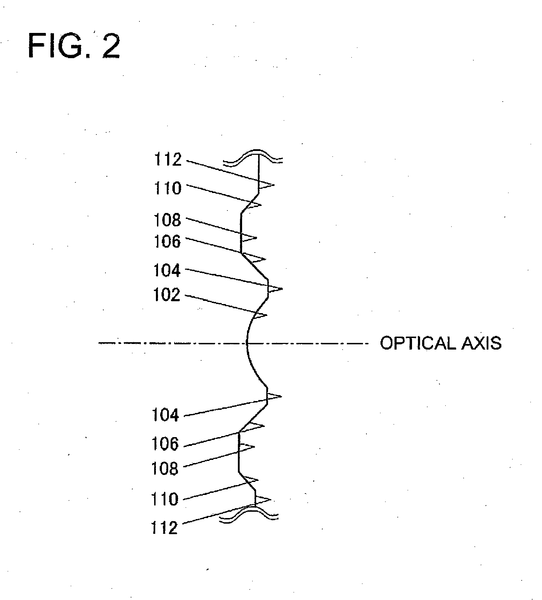

As shown in Fig. 2, which is a detailed section view of one block where the concave portion 102 is formed, in the periphery of concave portion 102, flat surface part 104, slant surface part 106, flat surface part 108, slant surface part 110, and flat surface part 112, are sequentially formed concentrically with a center of the concave portion 102. The surface of center part of the concave portion 102 is configured to be perpendicular to an optical axis (the axis of an optical system produced by molding from the molding die 100).

The figure of molding die 100 is not restricted to the approximate rectangular figure, but may be approximate cylindrical or divided cylindrical figure.

### [CUTTING DEVICE]

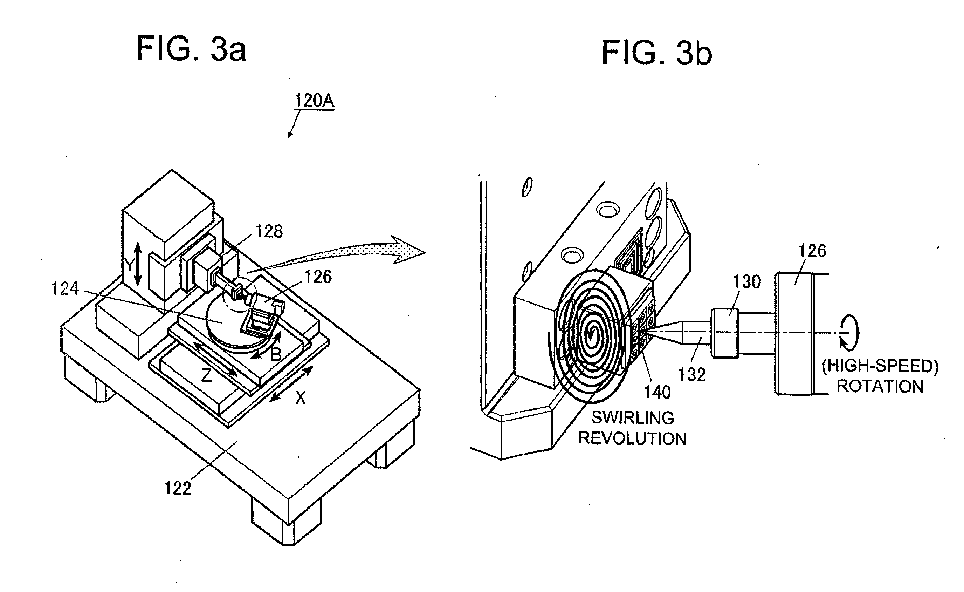

As shown in Fig. 3a, cutting device 120A has a platen 122. On the platen 122, a stage 124 having perpendicular axes and swirling axis is provided. The stage 124 is configured to be movable in X axis direction and Y axis direction as well as turnable along B axis direction. On the stage 124, a spindle 126 is provided. On the platen 122, a fixing tool 128 for fixing a subject material (work material) is provided. On the platen 122, the spindle 126 and the fixing tool 128 are arranged to face with each other. The fixing tool 128 is configured to be movable in Y axis direction, and the spindle 126 and the subject material are relatively movable.

The spindle 126 has a built-in spindle motor. As shown in Fig. 3b, at the main shaft 130 of the spindle motor, a ball end mill 132 is provided. The ball end mill is an example of cutting tools.

In order to process the optical surface in high precision, the spindle 126 provided with the ball end mill 132 is preferably configured to have an air bearing. As the power source for rotating the spindle motor, there are a spindle motor system built-in with a spindle motor, and an air turbine system supplying high pressure air. As for said power source, it is preferable to adopt the spindle motor system for ensuring high stiffness.

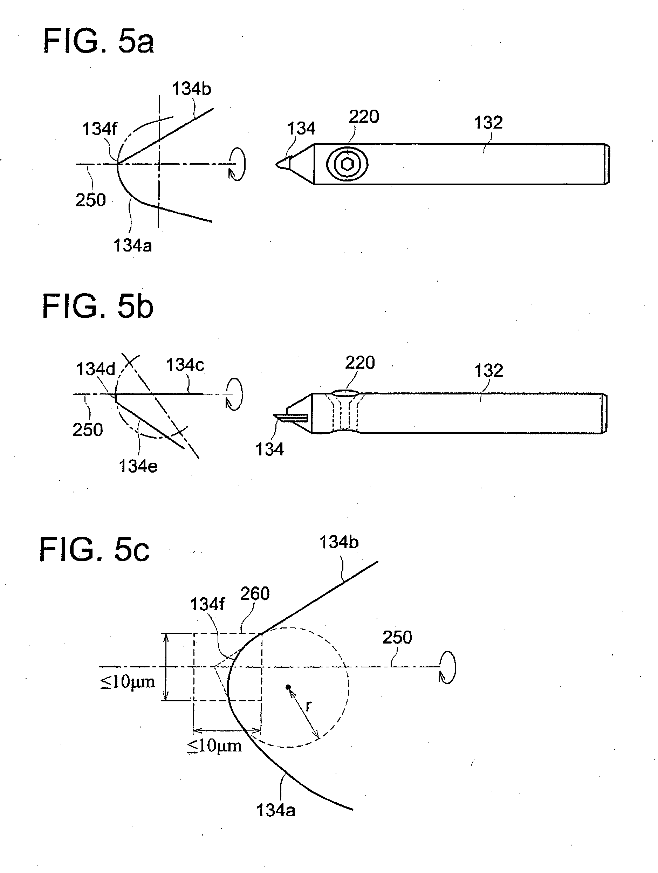

As shown in Figs. 5a and 5b, at the tip part of the ball end mill 132, a cutting blade 134 is fixed. The cutting blade is a diamond tip configured with a single-crystal diamond.

As shown in Fig. 5a, viewing with a planar view, the cutting blade 134 has a circular arc section 134a and a linear section 134b. And viewing with side view, as shown in Fig. 5b, the cutting blade 134 has linear sections 134c,134d, and 134e. The circular arc section 134a, the liner arc sections 134b-134e correspond to ridge lines where each plain surface configuring the cutting blade 134 meet.

In the spindle 126, when the spindle motor rotates, in conjunction with its rotation the cutting blade 134 rotates while drawing a hemispheric trajectory (refer to dashed double dotted lines in Figs. 5a and 5b). In this case a contact point of the circular arc section 134a, the liner arc sections 134b,134c and 134d is a rotation center part 134f of the spindle 126, and the rotation center part 134f does not substantially rotate.

As shown in Fig. 5a, the cutting blade 134 is arranged on a rotation axis 250 (rotation center axis) of the ball end mill 132. In the cutting blade 134, the rotation center part 134f is arranged on the rotation axis 250.

When viewing the rotation center part 134f with an enlarged plan view, as shown in Fig. 5c, the rotation center part 134f has a curvature.

In detail, the rotation center part 134f is configured with a part of circular arc, and radius **r** of said circular arc satisfies the conditions of: 0.05 ≤ **r** ≤ 5 µm. The radius r is set to be not less than 0.05 µm due to the reason that making less than 0.05 µm is difficult for manufacturing, and **r** is set to be not more than 5 µm due to the reason that an excellent molding die 100 exceeding a practical use level can be produced by machining the subject with this condition.

Further, rotation center part 134f resides within a square region 260 having not greater than 10 µm height and 10 µm width. Also, in this case where the rotation center part 134f resides inside the square region 260, the excellent molding die 100 exceeding a practical use level can be produced by machining the subject.

The rotation center part 134f may be configured, for example, with a part of an ellipsoidal arc or with just a curved line, viewing with the plan view. Just a cubed line means a curved line not configuring the circular arc, and said curved line may partially include a linear line.

The tip part of ball end mill 132 will be further described in detail.

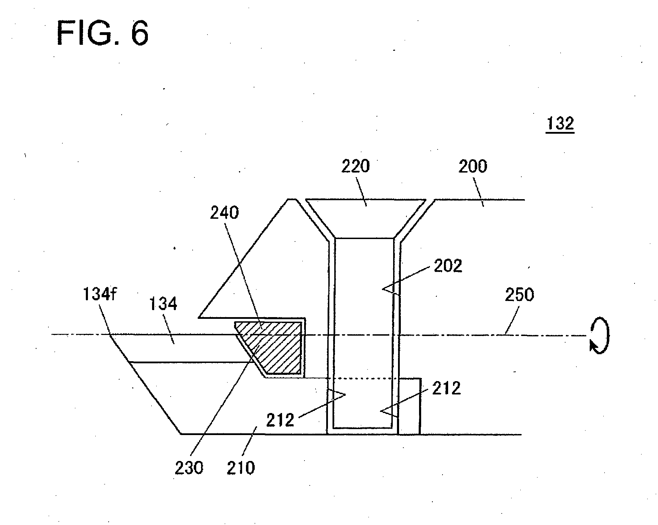

As shown in Fig. 6, said tip part is configured with a shank section 200 made of super-hard alloy (or cemented carbide). In the shank section 200, a through-hole 202 for screw insertion is formed.

On the shank section 200, a supporting member 210 for supporting and fixing the cutting blade 134 is disposed. Also in the supporting member 210, a through-hole 212 for screw insertion is formed.

On a tip end portion of the supporting member 210, the cutting blade 134 is brazed and fixed. As described above, the cutting blade 134 is arranged such that the rotation center part 134f matches to the rotation axis 250 of the ball end mill 132.

The through-hole 202 of the shank section 200 communicates with the through-hole 212 of the supporting member. Into these through-holes 202 and 212, a screw 220 is inserted and screwed to fix the supporting member 210 to the shank section 200. Although screw 220 is inserted from the shank section 200 toward the supporting member 210, it may be inserted in opposite direction (the direction from the supporting member 210 toward the shank section 200). At the tip part of ball end mill 132, the cutting blade 134 is configured to be fixed to the shank section 200 through the supporting member 210.

In the area enclosed by the shank section 200, supporting member 210, and the cutting blade 134, a void 230 is generated. In the void 230, a filling agent 240 is filled.

As the filling agent 240, a wax, a solder, a resin adhesive, and the like are used. The resin adhesive may be either a photo-curable resin or a thermo-setting resin.

Basically, the filling agent 240 is coated or injected before the supporting member 210 (with the cutting blade 314) is disposed on the shank section 200, and after that the supporting member 210 is attached. In case of using, as the filling agent 240, a material having fluidity such as the adhesive, the material may be injected into the void 230 after attaching the supporting member 210 onto the shank section 200.

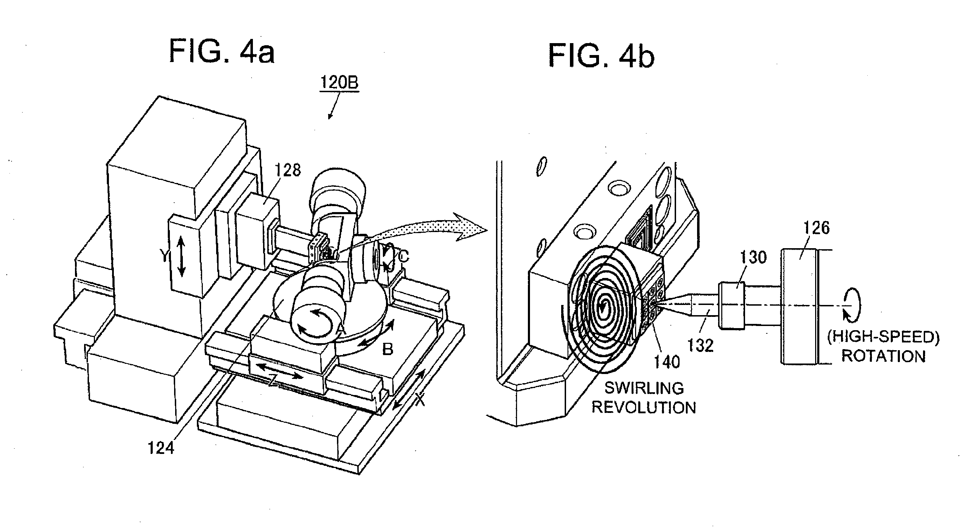

In replace to the cutting device 120A of Fig. 3a, the cutting device 120B of Fig. 4a can be utilized.

As shown in Fig. 4a, in the cutting device 120B, the spindle 126 (of ball end mill 132) is turnable also in A axis direction and C axis direction. Each rotation axis of A axis, B axis and C axis is perpendicular to each other. The other configurations of the cutting device 120B are same as those of the cutting device 120A (refer to Fig. 4b).

According to the cutting device 120B, the posture of the ball end mill 132 can be controlled such that a normal line on a blade tip profile line at any arbitral point of the tip blade (cutting blade 134) and a normal line of the processing surface become parallel with each other. As the result, the processing can be executed at one point of the tip of blade tool (cutting blade 134), which can suppress an influence of tip profile error of the blade tool against a processed (machined) figure.

### [MANUFACTURING METHOD OF CONCAVE MOLDING DIE]

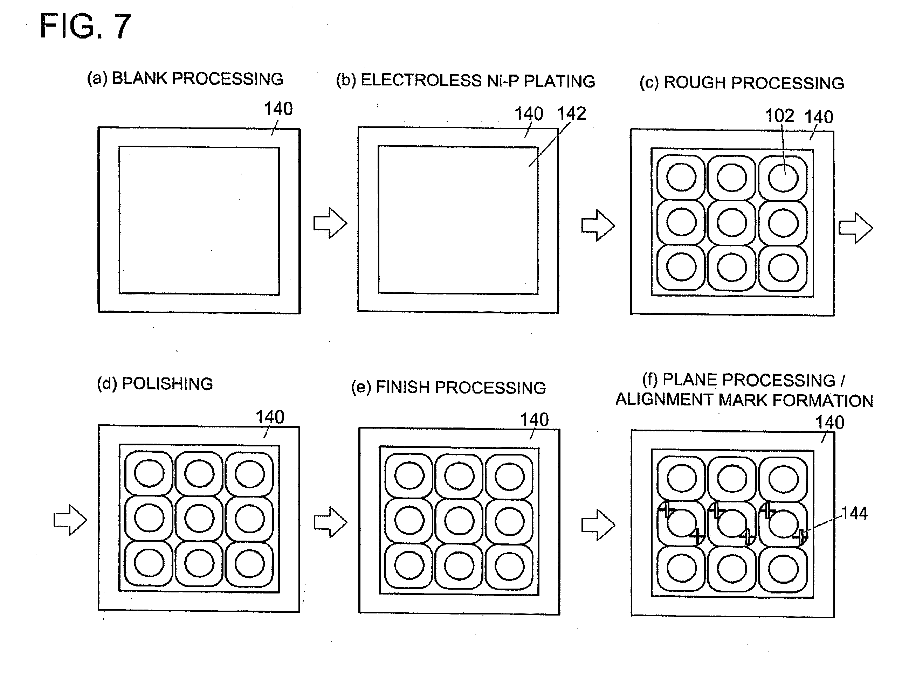

As shown in Fig. 7, the molding die 100 is manufactured mainly through processes of (a) - (g) below:
(a) Preparing a subject material 140, and applying a blank processing to a prescribed area of the subject material;
(b) Applying an electroless Ni-P (Nickel-Phosphorous) plating at the prescribed area on the subject material 140 to form a plated layer 142;
(c) Applying a rough processing, by using a general purpose machining center, to the surface (plated layer 142) of the subject material 140 to form an original form (concave or convex) of a concave part 102 and the like;
(d) Polishing the surface of the subject material 140 after the rough processing, to make a smooth surface;
(e) Applying a finish processing to the concave part 102 by using a diamond cutting blade; and
(f) Applying a plane processing on the surface of the subject material 140 to form a reference surface, and forms alignment marks on the reference surface.

The reference surface is a surface to be a reference in case of adjusting a height position to the other material.

The alignment mark 144 is use for position adjustment to the other material.

Depending on the surface condition of the processing surface (reference surface), polishing is executed after the processes of (e) and (f) to make the surface smooth. (g) Washing the subject material 140 to remove processing debris, forming SiO₂ layer on the surface of the subject material 140, and coating a release agent.

SiO₂ layer functions as a ground in case of coating the release agent. SiO₂ layer is formed by any of evaporation, CVD or spattering processing. In order to form the SiO₂ layer with uniform thickness, the DVD processing is preferable.

The release agent is a material for making the release of a mold easy from the molding die 100.

In the above description, as the process (c), the process of rough processing by the machining center to form the concave or convex part is provided, however, the rough processing is not restricted to said method but may be processed by other method. Therefore, the present invention is not restricted to the processing method or the cutting tool premising the rough processing by the use of the cutting tool.

In the process (e), the cutting device 120A is basically used.

As shown in Fig. 3b, by activating the spindle motor of the spindle 126, ball end mill 132 is rotated with high speed. Further, by cooperative operation of moving the stage 124 in X axis direction and Z axis direction and moving the fixing tool 128 in Y axis direction, the ball end mill 132 is allowed to make swirl revolution. Namely, by making swirl revolutions of the ball end mill while rotating the ball end mill, the finish processing of the surface of concave part 102 is executed.

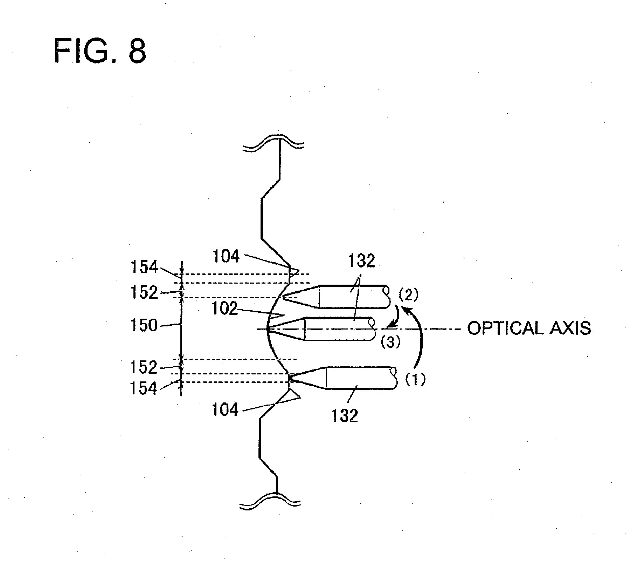

In this case, as shown in Fig. 8, from the most outside area 154 via area 152 to central area 150, the ball end mill swirls and contacts while being rotated with keeping parallel state to the optical axis, to execute the processing onto the concave part 102 and all or part of the plane surface part 104.

The area 150 is a central part of the concave part 102, and includes an area perpendicular to the optical axis.

The area 152 is a peripheral part of the concave part 102, and is adjacent to the area 150.

The area 154 is all or part of the plane surface part 104, and adjacent to the area 152.

Here, in the case where the rotation center part 134f of the cutting blade 134 is inflected (as sown with dotted line in Fig. 5c), the rotation center part 134f without substantial rotation is dragged and scuffed by the swirling movement of the spindle 162 to cause concavo-convex machined flaws as shown in Fig. 9a.

In contrast, according to the present embodiment, since the rotation center part 134f has a curvature, the rotation center part 134f draws the trajectory while smoothly contacting the concave part 102, thus even the rotation center part 134f contacts the concave part 102, the machined flaw is not generated (or, even if the machined flaw is generated, its concavo-convex height is small). Therefore, as shown in Fig. 9b, a smooth curved surface can be formed in the concave part 102.

Also in the case of using the cutting device 120A, since the rotation center part 134f has a curvature and smoothly contacts the concave part 102, the operation of inclining the rotation center part 134f against the concave part 102 by moving the spindle 126 in B axis direction is not necessary.

Further, in cases of not filling the filling agent 240 to the void 230 of ball end mill 132, rotation movement of the ball end mill is transmitted to the cutting blade 134 via the supporting member 210 to cause vibrations of the cutting blade 134, thus as shown in Fig. 10a, minute imbricate recesses and protrusions are formed in the concave part 102.

In contrast, according to the present embodiment, since the filling agent is filled in the void 230 of the ball end mill 132, transmission of the rotational force of the ball end mill 132 to the cutting blade is suppressed, and the vibration of the cutting blade is suppressed to enable the formation of smooth curved surface in the concave part 102 as shown in Fig. 10b.

As described above, in the case of manufacturing an optical system (molding) by transferring the figure of the concave part 102 of the molding die 100, quality of the optical surface of the optical system can be improved, and in case of using the optical system as an image capturing lens, generation of ghost images can be suppressed.

In the process (e), the cutting device 120B can be also used.

Also in the case of using the cutting device 120B, similarly to the case of using the cutting device 120A, by activating the spindle motor of the spindle 126, the ball end mill 132 is rotated in high speed. In addition, by cooperative operation of moving the stage 124 in X axis direction and Z axis direction and moving the fixing tool 128 in Y axis direction, the ball end mill 132 is allowed to make swirl revolution with respect to the subject material 140.

At this time, while turning the ball end mill further in A axis and C axis directions, the ball end mill is swirled to execute the processing at a single point of the cutting blade tool (cutting blade 134) for finish processing of the surface of the concave part 102.

Also in the process (f), the cutting device 12A or 120B is used.

In this case, by replacing the ball end mill 132 with a square end mill, the square end mill is swirled while rotating to execute a planer processing on surfaces of the flat surface parts 104 (remaining area excluding the area having been executed the finish processing), 108 and 112. As the result, the flat surface parts 104, 108 and 112 are effectively processed with planer processing.

The square end mill is a tool whose cutting blade profile draws a trajectory of cylinder or frustum of a cone, at the time of rotating the end mill.

In the process (f), replacing with the square end mill, a radius end mill may be used whose cutting blade is R-shaped in part. Obviously, the ball end mill may be used successively to the process (e) for the planer processing.

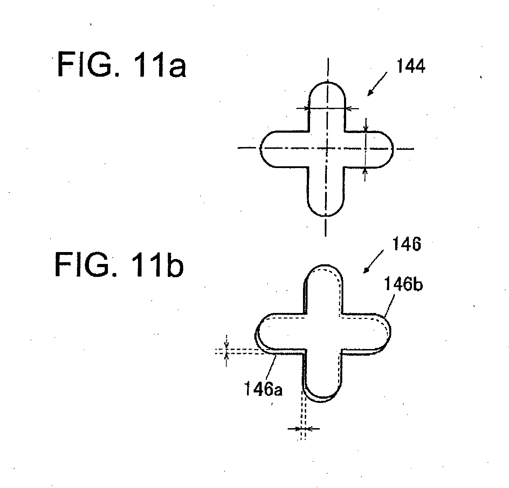

After that, as shown in Fig. 11a, a cross-shaped alignment mark 144 (groove) having a prescribed line width is formed in the flat surface part 112. For the formation of the alignment mark 144, the square end mill, the ball end mill, or a cutting blade having a planer sharp edge cutting blade is relatively moved with linear movement. The intersection point of each center line in vertical and lateral line widths can be used for the position alignment with other material.

In the process (f), alignment mark 146 shown in Fig. 11b may be formed. The alignment mark 146 is configured with overlapping cross-shaped grooves 146a and 146b. Placements of the groove 146a and the groove 146b are slightly displaced with each other, and the depth of groove 146a is less than the depth of groove 146b. Thus, between the groove 146a and the groove 146b, a step is formed, and the width of the step can be utilized for the position alignment with other materials.

Shape of the alignment mark 146 may be, other than cross-shaped, circler or a square and the like. As long as being able to work out the prescribed position of the alignment mark 146, its shape is not restricted.

### [VARIANT EXAMPLE (CONVEX MOLDING DIE)]

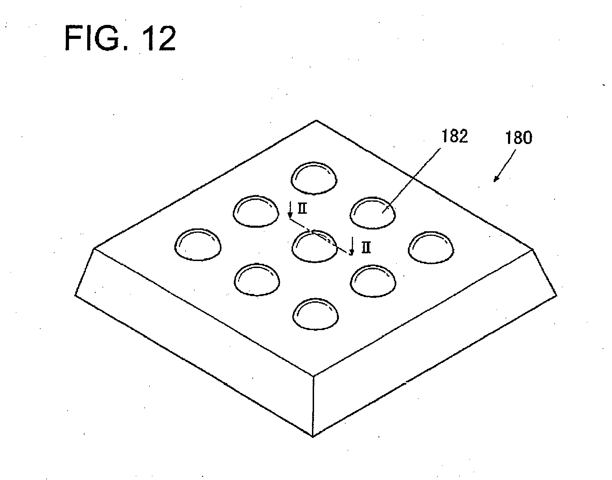

As shown in Fig. 12,

As shown in Fig. 12, molding die 180 has approximately a rectangular figure, and on its surface, multiple convex portions 182 (core) are formed. The molding die 180 is an example of the molding die for array lens.

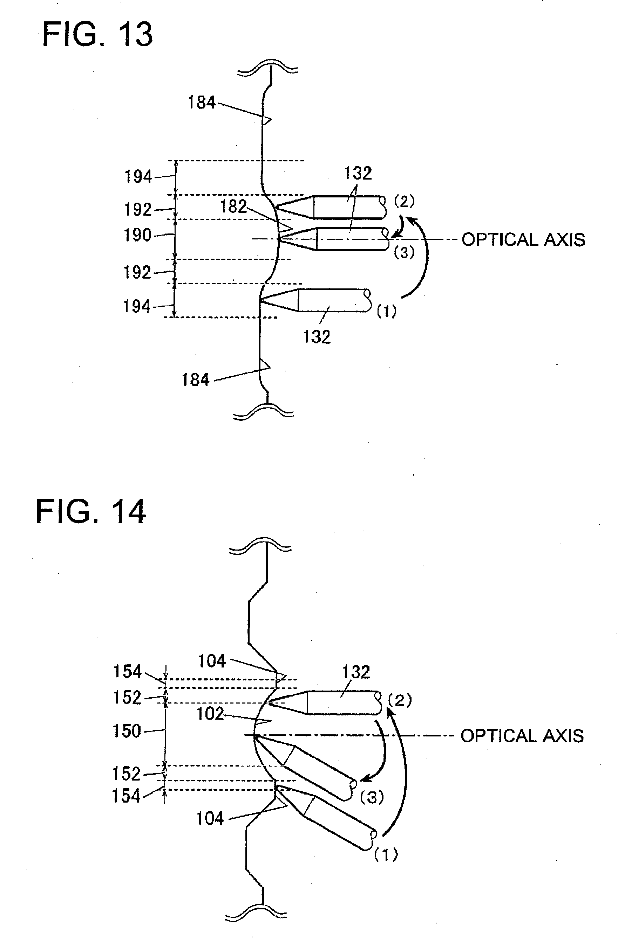

As shown in Fig. 13, which is a detailed section view of one block where the convex portion 182 is formed, in the periphery of convex portion 182, flat surface part 184, flat surface part 184 is formed concentrically with a center of the convex portion 182. The surface of center part of the convex portion 182 is configured to be perpendicular to an optical axis.

The figure of molding die 180 is not restricted to the approximate rectangular figure, but may be approximate cylindrical or divided cylindrical figure.

### [MANUFACTURING METHOD OF CONVEX MOLDING DIE]

The manufacturing method of the molding die 180 is similar to the manufacturing method of the molding die 100, except differences described below.

In the process (e), as shown in Fig. 13, from the most outside area 194 via area 192 to central area 190, the ball end mill swirls and contacts the subject while being rotated with keeping parallel state to the optical axis, to execute the processing onto the convex part 182 and all or part of the flat surface part 184.

The area 190 is a central part of the convex part 182, and includes an area perpendicular to the optical axis.

The area 192 is a peripheral part of the convex part 182, and is adjacent to the area 190.

The area 194 is all or part of the flat surface part 184, and adjacent to the area 192.

### [VARIANT EXAMPLE]

As a variant example of the above described process (e) (finish processing of concave part 102 by using the diamond cutting blade), the posture of the ball end mill 132 could be changed by each area of 150,152,154, as shown in Fig. 14.

"The area including an area vertical to the optical axis" is defined as an area where, when the rotation axis of the ball end mill 132 is inclined against the optical axis by a prescribed angle as described later, the dislocated rotation angle becomes not to interfere with the processing surface of the concave part 102, and at least an area including a region ranging to the point where the angle, between a line perpendicular to the displaced rotation axis of the ball end mill from the optical axis of the concave part 102 and a tangent line at the cross point of the inclined rotation axis line and the surface forming the concave part 102, becomes other than zero degree (since in zero degree, the center of rotation axis of the inclined ball end mill 132 is still in contact relation to the processing surface of the concave part 102).

In case of processing from the area 154 via area 152 to area 150 while making swirl revolution of the ball end mill 132 (refer to Fig. 3b), in the area 154 the rotation axis of the ball end mill 132 is slightly inclined to the optical axis ((1) in Fig. 14), in the area 152 the rotation axis of the ball end mill 132 is kept parallel to the optical axis ((2) in Fig. 14), and in the area 150 the rotation axis of the ball end mill 132 is slightly inclined again to the optical axis ((3) in Fig. 14).

In case of changing the posture of the ball end mill 132 from the area 154 to the area 152 or from the area 152 to the area 150, it is preferable to complete the posture change by one loop of the swirling revolution of the ball end mill 132.

Further, it is preferable to make swirl revolution of the ball end mill 132 with a visual angle of 10 - 90% of the inclination angle of the ball end mill which is an inclined angle at the time of attaching the ball end mill 132.

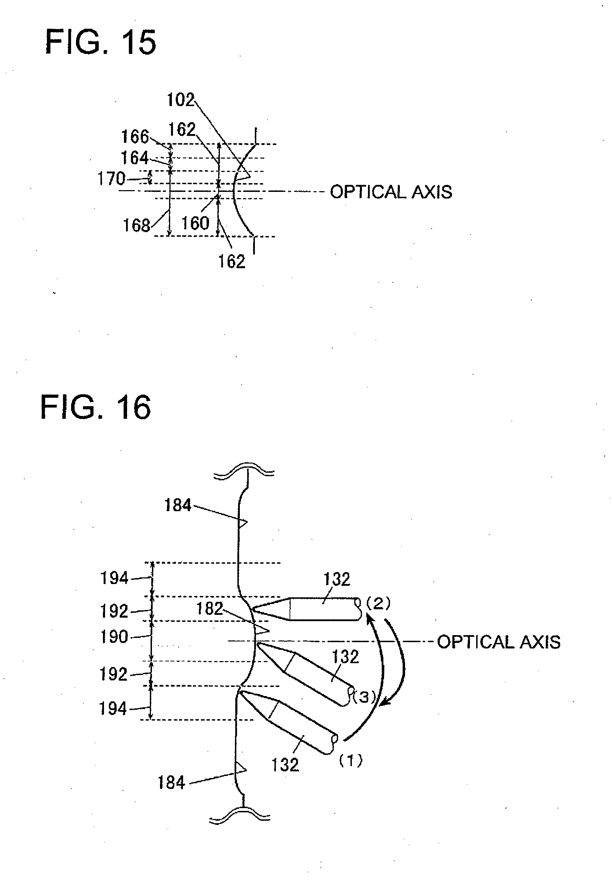

The posture change of the ball end mill 132 is conducted based on the following principle (refer to Fig. 15).

In cases where the rotation axis of the ball end mill 132 is kept to be inclined to the optical axis, in a certain area 164 of the concave part 102 dislocated from the optical axis, the rotation center part 134f contacts the surface and is dragged and scuffed by the swirling movement of the spindle 162, while the rotation center part 134f does not contact its peripheral areas 166 and 168.

Therefore, by changing the posture of the ball end mill 132 in the area 170 between the area 160 and the area 164, the rotation center part 134f can be prevented from being dragged and scuffed in the area 160 and the area 164.

In case of transferring the posture of the ball end mill 132 from the state of being parallel to the state of being inclined to the optical axis, the rotation center part 134f does not contact the concave part 102, which enables to prevent the formation of machined flaw, as shown in Fig. 9b.

Although, in case of changing the posture of the ball end mill 132, a swirling center of the spindle 126 may be displaced to cause a processing error, this problem can be addressed by correcting the error.

As a variant example of manufacturing the convex molding die, the posture of the ball end mill 132 is changed by each area of 190, 192 and 194, as shown in Fig. 16.

In the process (e), areas from the area 154 via area 152 to area 150 are processed while making swirl revolution of the ball end mill 132 (refer to Fig. 3b), in the area 190 the rotation axis of the ball end mill 132 is slightly inclined to the optical axis ((1) in Fig. 16), in the area 192 the rotation axis of the ball end mill 132 is kept parallel to the optical axis ((2) in Fig. 16), and in the area 190 the rotation axis of the ball end mill 132 is slightly inclined again to the optical axis ((3) in Fig. 14).

### EXPLANATION OF CODE

100: molding die
102: concave part (cavity)
104: flat surface part
106: slant surface part
108: flat surface part
110: slant surface part
112: flat surface part
120A, 120B: cutting device
122: platen
124: stage
126: spindle
128: fixing tool
130: main shaft (of a spindle motor)
132: ball end mill
134: cutting blade
134a: circular arc section
134b: linear section
134c, 134d, 134e: linear section
134f: rotation center part
140: subject material to be cut
142: plated layer
144, 146: alignment mark
146a, 146b: groove
150,152,154: area
180: molding die
182: convex part (core)
184: flat surface part
190, 192, 194: area
200: shank section
202: through-hole
210: supporting member
212: through-hole
220: screw
230: void (or space)
240: filling agent
250: rotation axis
260: square region

## Claims

1. A cutting tool (132) comprising:
a cutting blade (134);
a shank section (200); and
a supporting member (210) for supporting and fixing the cutting blade (134), the cutting blade (134) being fixed on one end of the supporting member (210), and the other end of the supporting member (210) being fixed to the shank section (200),
wherein a void (230) is formed among the shank section (200), the cutting blade (134), and the supporting member (210), **characterised in that** the void (230) is filled with a filling agent (240).

2. The cutting tool (132) described in claim 1, wherein the filling agent (240) is a wax, a solder, or a resin adhesive.

3. The cutting tool (132) described in claim 1 or 2,
wherein a rotation center part (134f) of the cutting blade (134) is a part of a circular arc, and a radius r of the circular arc of the rotation center part (134f) satisfies the condition of: 0.05 ≤ **r** ≤ 5µm.

4. The cutting tool (132) described in claim 3, wherein the rotation center part (134f) is within a square range having sides of 10 µm.

5. Use of a cutting tool (132) as defined in claim 3 or 4 for cutting a subject material (140) by making a swirling revolution of the cutting blade (134) while rotating a part of the cutting blade (134) about the rotation center part (134f) of the cutting blade (134).

6. A method for manufacturing a molding die (100) by a cutting work using a cutting tool (132) as defined in any one of claims 1 to 4,
the method comprising the steps of:
forming a convex or concave part (102) by applying a rough processing to a subject material (140) to be cut; and
applying a finish processing to the convex or concave part (102) by making swirling revolution of the cutting tool (132) while rotating the cutting tool (132) with respect to the convex or concave part (102),
wherein in the step of applying the finish processing to the convex or concave part (102), with respect to a first area including an area perpendicular to an optical axis of an optical system to be produced by molding from the convex or concave part (102), a cutting work of the finish processing is executed by inclining a rotation axis (250) of the cutting tool (132)against the optical axis, and with respect to a second area adjacent to the first area, the cutting work is executed by making the rotation axis (250) of the cutting tool (132)parallel to the optical axis.

7. The method for manufacturing a molding die (100) described in claim 6, wherein in the step of applying the finish processing, a plurality of the concave or convex part (102) are processed in an array arrangement.

8. The method for manufacturing a molding die (100) described in claim 7, in case of changing a posture of the cutting tool (132)between the first area and the second area, the posture change is completed by a single loop of the swirling revolution of the cutting tool (132).

9. The method for manufacturing a molding die (100) described in claim 8, wherein the cutting tool (132)is made swirling revolution with a visual angle of 10 - 90% of the inclination angle of the cutting tool (132) in the first area.

## Patentansprüche

1. Ein Schneidwerkzeug (132) mit:
einer Schneidklinge (134),
einem Schaftabschnitt (200), und
einem Halteelement (210) zum Halten und Fixieren der Schneidklinge (134), wobei die Schneidklinge (134) an einem Ende des Halteelements (210) fixiert ist und das andere Ende des Halteelements (210) an dem Schaftabschnitt (200) fixiert ist,
wobei ein Hohlraum (230) unter dem Schaftabschnitt (200), der Schneidklinge (134) und dem Halteelement (210) ausgebildet ist, **dadurch gekennzeichnet, dass** der Hohlraum (230) mit einer Füllmasse (240) gefüllt ist.

2. Das Schneidwerkzeug (132) gemäß Anspruch 1, wobei die Füllmasse (240) ein Wachs, ein Lötmaterial oder ein Harzklebstoff ist.

3. Das Schneidwerkzeug (132) gemäß Anspruch 1 oder 2,
wobei ein Rotations-Zentrumsteil (134f) der Schneidklinge (134) ein Teil eines kreisförmigen Bogens ist, und ein Radius r des kreisförmigen Bogens des Rotations-Zentrumsteils (134f) der Bedingung 0,05 ≤ r ≤ 5 µm genügt.

4. Das Schneidwerkzeug (132) gemäß Anspruch 3, wobei sich das Rotations-Zentrumsteil (134f) in einem quadratischen Bereich mit Seiten von 10 µm befindet.

5. Verwendung eines Schneidwerkzeugs (132) gemäß Anspruch 3 oder 4 zum Schneiden eines Ausgangsmaterials (140) durch Vollziehen einer wirbelnden Drehung ("swirling revolution") der Schneidklinge (134) während ein Teil der Schneidklinge (134) um das Rotations-Zentrumsteil (134f) der Schneidklinge (134) gedreht wird.

6. Ein Verfahren zum Herstellen eines Formwerkzeugs (100) durch eine Zerspanungsarbeit unter Verwendung eines Schneidwerkzeugs (132) gemäß einem der Ansprüche 1 bis 4,
wobei das Verfahren die folgenden Schritte aufweist:
Ausbilden eines konvexen oder konkaven Teils (102) durch Anwenden einer Grobbearbeitung auf ein spanend zu bearbeitendes Ausgangsmaterial (140), und
Anwenden einer Endbearbeitung auf den konvexen oder konkaven Teil (102) durch Vollziehen einer wirbelnden Drehung ("swirling revolution) des Schneidwerkzeugs (132) während das Schneidwerkzeug (132) bezüglich des konvexen oder konkaven Teils (102) gedreht wird,
wobei in dem Schritt des Anwendens der Endbearbeitung auf den konvexen oder konkaven Teil (102) eine Zerspanungsarbeit der Endbearbeitung bezüglich eines ersten Bereichs mit einem bezüglich einer optischen Achse eines optischen Systems, welches durch Ausformung des konvexen oder konkaven Teils (102) herzustellen ist, rechtwinklig verlaufenden Bereich, durch Neigen einer Rotationsachse (250) des Schneidwerkzeugs (132) gegenüber der optischen Achse durchgeführt wird, und die Zerspanungsarbeit bezüglich eines zweiten Bereichs, welcher an den ersten Bereich angrenzt, durch Anordnen der Rotationsachse (250) des Schneidwerkzeugs (132) parallel zu der optischen Achse durchgeführt wird.

7. Das Verfahren zum Herstellen eines Formwerkzeugs (100) gemäß Anspruch 6, wobei in dem Schritt des Anwendens der Endbearbeitung eine Vielzahl der konkaven oder konvexen Teile (102) in einer Array-Anordnung hergestellt werden.

8. Das Verfahren zum Herstellen eines Formwerkzeugs (100) gemäß Anspruch 7, wobei im Fall des Veränderns einer Anordnung des Schneidwerkzeugs (132) zwischen dem ersten Bereich und dem zweiten Bereich der Anordnungswechsel durch eine einzelne Schleife der wirbelnden Drehung des Schneidwerkzeugs (132) vollständig durchgeführt wird.

9. Das Verfahren zum Herstellen eines Formwerkzeugs (100) gemäß Anspruch 8, wobei das Schneidwerkzeug (132) eine wirbelnde Drehung mit einem sichtbaren Winkel von 10 - 90% des Neigungswinkels des Schneidwerkzeugs (132) in dem ersten Bereich vollzieht.

## Revendications

1. Outil de découpe (132) comprenant :
une lame de découpe (134) ;
une section de tige (200) ; et
un organe de support (210) pour supporter et fixer la lame de découpe (134), la lame de découpe (134) étant fixée à une extrémité de l'organe de support (210), et l'autre extrémité de l'organe de support (210) étant fixée à la section de tige (200) ;
dans lequel un espace (230) est formé entre la section de tige (200), la lame de découpe (134), et l'organe de support (210), **caractérisé en ce que** l'espace (230) est rempli d'un agent de remplissage (240).

2. Outil de découpe (132) selon la revendication 1, dans lequel l'agent de remplissage (240) est une cire, une soudure ou une résine adhésive.

3. Outil de découpe (132) selon la revendication 1 ou 2, dans lequel une partie de centre de rotation (134f) de la lame de découpe (134) est une partie d'un arc de cercle, et un rayon r de l'arc de cercle de la partie de centre de rotation (134f) satisfait à la condition de : 0,05 ≤ r ≤ 5 µm.

4. Outil de découpe (132) selon la revendication 3, dans lequel la partie de centre de rotation (134f) se trouve à l'intérieur d'une plage carrée ayant des côtés de 10 µm.

5. Utilisation d'un outil de découpe (132) selon la revendication 3 ou 4 pour découper un matériau concerné (140) en effectuant une rotation en tourbillon de la lame de découpe (134) tout en faisant tourner une partie de la lame de découpe (134) autour de la partie de centre de rotation (134f) de la lame de découpe (134).

6. Procédé de fabrication d'une matrice de moulage (100) par un travail de découpe en utilisant un outil de découpe (132) selon l'une quelconque des revendications 1 à 4,
le procédé comprenant les étapes de :
former une partie convexe ou concave (102) en appliquant un usinage d'ébauche à un matériau concerné (140) à découper; et
appliquer un usinage de finition à la partie convexe ou concave (102) en effectuant une rotation en tourbillon de l'outil de découpe (132) tout en faisant tourner l'outil de découpe (132) par rapport à la partie convexe ou concave (102),
dans lequel, à l'étape de l'application de l'usinage de finition à la partie convexe ou concave (102), par rapport à une première zone comprenant une zone perpendiculaire à un axe optique d'un système optique à produire par moulage à partir de la partie convexe ou concave (102), un travail de découpe de l'usinage de finition est exécuté en inclinant un axe de rotation (250) de l'outil de découpe (132) contre l'axe optique, et par rapport à une deuxième zone adjacente à la première zone, le travail de découpe est exécuté en rendant l'axe de rotation (250) de l'outil de découpe (132) parallèle à l'axe optique.

7. Procédé de fabrication d'une matrice de moulage (100) selon la revendication 6, dans lequel, à l'étape de l'application de l'usinage de finition, une pluralité de parties concaves ou convexes (102) sont traitées dans un agencement en réseau.

8. Procédé de fabrication d'une matrice de moulage (100) selon la revendication 7, dans lequel, dans le cas d'un changement de posture de l'outil de découpe (132) entre la première zone et la deuxième zone, le changement de posture est effectué par une boucle unique de la rotation en tourbillon de l'outil de découpe (132).

9. Procédé de fabrication d'une matrice de moulage (100) selon la revendication 8, dans lequel l'outil de découpe (132) effectue une rotation en tourbillon avec un angle visuel de 10 à 90 % de l'angle d'inclinaison de l'outil de découpe (132) dans la première zone.
